# EUROPÄISCHE PATENTSCHRIFT

(11) **EP 2 505 525 B1**
(45) Veröffentlichungstag und Bekanntmachung des Hinweises auf die Patenterteilung: **28.01.2015**
(21) Anmeldenummer: 12161738.5
(22) Anmeldetag: 28.03.2012
(51) Int. Cl.: B65G 23/04, B65G 39/12

(54) **Welle zur Verwendung in Antriebs- und Transportvorrichtungen**
Shaft for use in drive and transport devices
Arbre pour l'utilisation dans des dispositifs d'entraînement et de transport

(30) Priorität: 31.03.2011 DE 102011006556
(43) Veröffentlichungstag der Anmeldung: 03.10.2012
(73) Patentinhaber: Max Schlatterer GmbH & Co. KG, 89542 Herbrechtingen (DE)
(72) Erfinder: Martin, Rainer, 89522 Heidenheim (DE)
(74) Vertreter: Schmid, Wolfgang

(56) Entgegenhaltungen:
- EP-A2- 0 061 893
- WO-A2-2008/019455
- DE-A1- 4 234 096

## Beschreibung

Die Erfindung betrifft eine Welle zur Verwendung in Antriebs-und Transportvorrichtungen mit zwei Endteilen und mindestens einem zwischen den beiden Endteilen montierten Mittelteil nach der im Oberbegriff von Anspruch 1 näher definierten Art.

Bei Antriebs- und Transportvorrichtungen können Bänder und Riemen zum Einsatz kommen, die jeweils über gelagerte Wellen umlaufen. Denkbar ist beispielsweise, dass mit den Bändern bzw. Riemen eine Kraft übertragen wird oder dass auf diesen ein Fördergut transportiert wird. Die verwendeten Wellen sind typischerweise beidseitig gelagert und das Band bzw. der Riemen kann in manchen Fällen zwischen den beiden Wellen auch gespannt verlaufen. Beispielsweise können Maschinen aus der Holz- und Metallbearbeitung ebenfalls Antriebsvorrichtungen mit auf Wellen laufenden Bändern oder Riemen aufweisen. Im Betrieb sind diese Bänder und Riemen einem verschleiß ausgesetzt bzw. können auch durch einen Defekt ausfallen, so dass diese ausgetauscht werden müssen.

Ein derartiges Band bzw. einen derartigen Riemen beispielsweise nach einem definiertem Zeitintervall wechseln zu können, werden nach dem Stand der Technik bevorzugt zwei Vorgehensweisen angewendet. Zum einen kann die Antriebs- bzw. Transportvorrichtung in ihre Einzelteile zerlegt werden, was in der Regel sehr kosten- und zeitintensiv ist. Zu den einzelnen Arbeitsschritten bei der Demontage zählen dabei beispielsweise das Entspannen des Bands bzw. des Riemens durch eine Bewegung der beiden gelagerten Wellen zueinander, das Lösen der Wellen aus den Lagerungen und das Entfernen des Bands bzw. des Riemens von den Wellen. Gegebenfalls müssen auch zusätzliche Konstruktionselemente an der Antriebs- bzw. Transportvorrichtung, beispielsweise an den Lagerungen, vorhanden sein, um diese Demontageschritte und auch die Montage der Vorrichtung durchführen zu können. Zum anderen können derartige Bänder und Riemen auch vor dem Wechseln durchtrennt werden und auf diese Weise von den beiden Wellen gelöst werden. Falls keine Demontage mit anschließender Montage von Teilen der Antriebs- bzw. Transportvorrichtung gewünscht ist, können beispielsweise auch Bänder und Riemen eingesetzt werden, die nicht als Endlosbänder bzw. -riemen ausgeführt sind. Jedoch müssen diese beim Austauschvorgang um die Wellen gelegt und anschließend an ihrer Trennstelle zusammengefügt werden. Auch bei dieser Vorgehensweise ist der Austausch eines Bands bzw. eines Riemens im Allgemeinen sehr zeit- und kostenintensiv. Gleichzeitig können im dem zuletzt genanten Fall keine endlosen Bänder oder Riemen eingesetzt werden.

In der EP 0 061 893 A2 ist eine gattungsgemäße Welle beschrieben, die eine zylindrische äußere Lauffläche aufweist, die über Kugellager auf inneren Haltezapfen befestigt ist. Die Haltezapfen können mit einem Rahmenteil verbunden werden, um auf diese Weise die Welle an einem Rahmen anzubringen.

Eine ähnliche Welle ist auch in der WO 2008/019455 A2 beschrieben.

Aus der DE 42 34 096 A1 ist eine Förderkonstruktion bekannt, die einen Rahmen und eine an dem Rahmen gelagerte Antriebsspindel aufweist.

Der Erfindung liegt die Aufgabe zugrunde, eine Welle zur Verwendung in Antriebs- und Transportvorrichtungen zu schaffen, mit der ein Austauschvorgang von über eine solche Welle umlaufenden Bändern oder Riemen einfacher sowie zeit- und kosteneffizienter durchgeführt werden kann.

Erfindungsgemäß wird diese Aufgabe durch die in Anspruch 1 genannten Merkmalen gelöst.

Durch die erfindungsgemäße Ausgestaltung der Welle mit den zwei Endteilen und dem zwischen den beiden Endteilen montierten, mittels der Verriegelungseinrichtung mit den End-teilen verriegelbaren Mittelteil ist ein sehr einfaches sowie zeit- und damit kostensparendes Wechseln eines um die Welle umlaufenden Bands mit einem verringertem Kosten- und Zeitaufwand möglich, da die Welle in radialer Richtung demontiert werden kann und in axialer Richtung so gut wie kein zusätzlicher Bauraum erforderlich ist.

Dadurch können bei Anwendungen, in denen bislang verbundene Bänder oder Riemen eingesetzt wurden, endlose Bänder oder Riemen verwendet werden, was für viele Anwendungen erhebliche Vorteile mit sich bringt. Außerdem können aus Meterware gefertigte Bänder oder Riemen außerhalb der Antriebs- oder Transportvorrichtung verbunden werden. Dabei ist auch eine Vorkonfektionierung des Bandes möglich.

Mit der erfindungsgemäßen Konstruktion lässt sich außerdem eine längere Standzeit und ein ruhigerer Lauf des Bandes erreichen.

Ein weiterer Vorteil besteht darin, dass Antriebs- und Transportvorrichtungen, die mit derartigen Wellen ausgestattet sind, einfacher und platzsparender konstruiert und gebaut werden können. Beim Umrüsten von bestehenden Antriebs-und Transportvorrichtungen ist vorteilhafterweise in den meisten Fällen keine Änderung der bestehenden Lagerkonstruktion erforderlich.

In einer vorteilhaften Ausführungsform der Erfindung kann vorgesehen sein, dass an dem Kolben ein Verriegelungsbolzen angebracht ist, der in dem verriegelten Zustand des Mittelteils in eine Aussparung eingreift, in welcher er mittels des jeweiligen Sicherungselements verriegelbar ist. Auf diese Weise ist eine besonders einfache Verriegelung des Kolbens über den Verriegelungsbolzen möglich.

Eine sehr einfache Verstellung des Kolbens lässt sich erreichen, wenn in einer sehr vorteilhaften Weiterbildung der Erfindung vorgesehen ist, dass der Kolben mittels einer in einem zu dem Kolben benachbarten Druckraum einen Unterdruck erzeugenden Unterdruckerzeugungseinrichtung verschieblich ist.

Die Unterdruckerzeugungseinrichtung kann insbesondere eine mit Druck beaufschlagbare Druckleitung, ein in der Druckleitung angeordnetes Unterdruckerzeugungselement und eine von dem Unterdruckerzeugungselement zu dem Druckraum führende Unterdruckleitung aufweisen. Dies stellt eine sehr einfach zu realisierende, zuverlässige und einen geringen Wartungsaufwand erzeugende Ausführungsform der Unterdruckerzeugungseinrichtung sein.

Wenn des weiteren vorgesehen ist, dass die Druckleitung mittels eines Verschließelements verschließbar ist, um über das Unterdruckerzeugungselement in dem Druckraum einen Überdruck zu erzeugen, so lässt sich mittels der Unterdruckerzeugungseinrichtung der Kolben in Abhängigkeit davon, ob das Verschließelement montiert ist oder nicht, in beide Richtungen verschieben.

Um die Wirkung der Unterdruckerzeugungseinrichtung zu verstärken, kann des Weiteren vorgesehen sein, dass zu dem Kolben eine Überdruckleitung führt, über welche der Kolben derart mit Druck beaufschlagbar ist, dass der Kolben verschieblich ist.

Alternativ zu dem Einsatz einer Unterdruckerzeugungseinrichtung kann der Kolben auch mittels einer mechanischen Getriebeeinrichtung verschieblich sein.

Eine solche mechanische Getriebeeinrichtung kann beispielsweise eine Zahnstange und ein mit der Zahnstange in Eingriff bringbares Zahnrad aufweisen. Es ist jedoch auch eine Ausführungsform der mechanischen Getriebeeinrichtung als Exzentergetriebe oder als anderes geeignetes Getriebe denkbar.

An dem Kolben kann außerdem wenigstens ein Führungsbolzen angebracht sein, welcher im verriegelten Zustand des Mittelteils gegenüber dem jeweiligen Endteil in wenigstens eine zugehörige Ausnehmung eingreift. Dieser wenigstens eine Führungsbolzen ermöglicht eine verdrehsichere Verbindung zwischen dem Endteil und dem Mittelteil der Welle in radialer Richtung sowie die Übertragung von Drehmomenten und Biegemomenten zwischen dem Endteil und dem Mittelteil. Es ist zu bevorzugen, mehrere Führungsbolzen vorzusehen, es ist jedoch auch möglich, lediglich einen Führungsbolzen an dem Kolben anzubringen.

Der Kolben kann in dem Mittelteil der Welle und die Aussparung und das Sicherungselement in den jeweiligen Endteilen angeordnet sein. Dies stellt eine einfache Ver- und Entriegelung des jeweiligen Endteils mit dem Mittelteil sicher und erfordert einen geringeren Raumbedarf.

Eine weitere vorteilhafte Ausgestaltung der Erfindung kann darin bestehen, dass benachbart zu dem Kolben ein ringförmiges Bauteil angeordnet ist, welches mittels des Kolbens verschieblich ist, und dass das ringförmige Bauteil mit dem jeweiligen Endteil derart verbindbar ist, dass von dem jeweiligen Endteil ein Drehmoment auf das ringförmige Bauteil übertragbar ist. Auf diese Weise wird die Übertragung des Drehmoments auf der einen und die Übertragung von Biegemomenten und Kräften auf der anderen Seite voneinander entkoppelt.

Um das Drehmoment zu übertragen, kann eine vorteilhafte Weiterbildung darin bestehen, dass das ringförmige Bauteil mehrere konische Bolzen aufweist, die in dem verriegelten Zustand des Mittelteils in jeweilige Ausnehmungen in dem jeweiligen Endteil eingreifen.

Des Weiteren kann vorgesehen sein, dass wenigstens eines der Endteile eine Hülse aufweist, in der Aussparungen zur Aufnahme von Verriegelungselementen vorgesehen sind. Dies stellt eine einfache Möglichkeit zur Verriegelung des jeweiligen Endteils mit dem Mittelteil dar.

Wenn zwischen dem Mittelteil und den Endteilen ein Dichtungselement angeordnet ist, so wird die sichere Wirkungsweise der Unterdruckerzeugungseinrichtung gewährleistet.

In Anspruch 15 ist eine Antriebs- oder Transportvorrichtung mit einer erindungsgemäßen Welle angegeben.

Im Folgenden werden Ausführungsbeispiele der Erfindung anhand der prinzipmäßigen Zeichnung näher erläutert.

Es zeigt:
- Fig. 1: eine erfindungsgemäße Welle mit einem Mittelteil und zwei Endteilen im verriegelten Zustand;
- Fig. 2: eine Antriebs- und Transportvorrichtung mit zwei Wellen und einem um dieselben umlaufenden Band;
- Fig. 3: ein von dem Mittelteil demontiertes Endteil der Welle in einer Draufsicht;
- Fig. 4: einen Schnitt nach der Linie IV - IV aus Fig. 1;
- Fig. 5: einen Abschnitt eines Mittelteils und ein Endteil der Welle im verriegelten Zustand;
- Fig. 6: einen Abschnitt eines Mittelteils und ein Endteil der Welle im entriegeltem Zustand;
- Fig. 7: einen Anschnitt eines Mittelteils und ein Endteil der Welle im entriegeltem Zustand;
- Fig. 8: einen Abschnitt eines Mittelteils und ein Endteil der Welle im demontierten Zustand;
- Fig. 9: zwei demontierte Wellen mit einem umlaufenden Band einer Antriebs- und Transportvorrichtung;
- Fig. 10: einen Abschnitt eines Mittelteils und ein Endteil einer Welle einer Antriebs- und Transportvorrichtung in einer alternativen Ausführungsform;
- Fig. 11: eine alternative Ausführungsform der erfindungsgemäßen Welle;
- Fig. 12: eine erste Ansicht einer weiteren alternativen Ausführungsform der erfindungsgemäßen. Welle;
- Fig. 13: eine weitere Ansicht der Welle aus Fig. 12;
- Fig. 14: eine perspektivische Ansicht der Welle aus Fig. 12 und Fig. 13;
- Fig. 15: eine erste Ansicht einer weiteren alternativen Ausführungsform der erfindungsgemäßen Welle;
- Fig. 16: eine perspektivische Ansicht der Welle aus Fig. 15;
- Fig. 17: eine weitere Schnittansicht der Welle aus Fig. 15;
- Fig. 18: eine weitere Schnittansicht der Welle aus Fig. 15;
- Fig. 19: eine weitere Seitenansicht der Welle aus Fig. 15;
- Fig. 20: einen Schnitt nach der Linie XX-XX aus Fig. 19;
- Fig. 21: eine erste Ansicht einer weiteren alternativen Ausführungsform der erfindungsgemäßen Welle;
- Fig. 22: eine weitere Ansicht der Welle aus Fig. 21; und
- Fig. 23: eine perspektivische Ansicht der Welle aus Fig. 21 und Fig. 22.

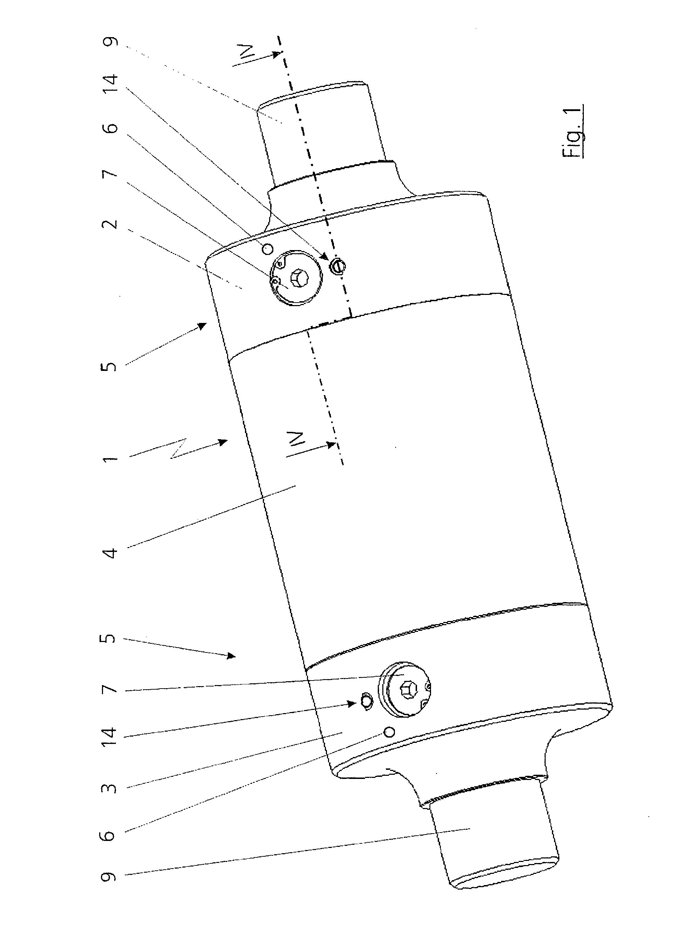

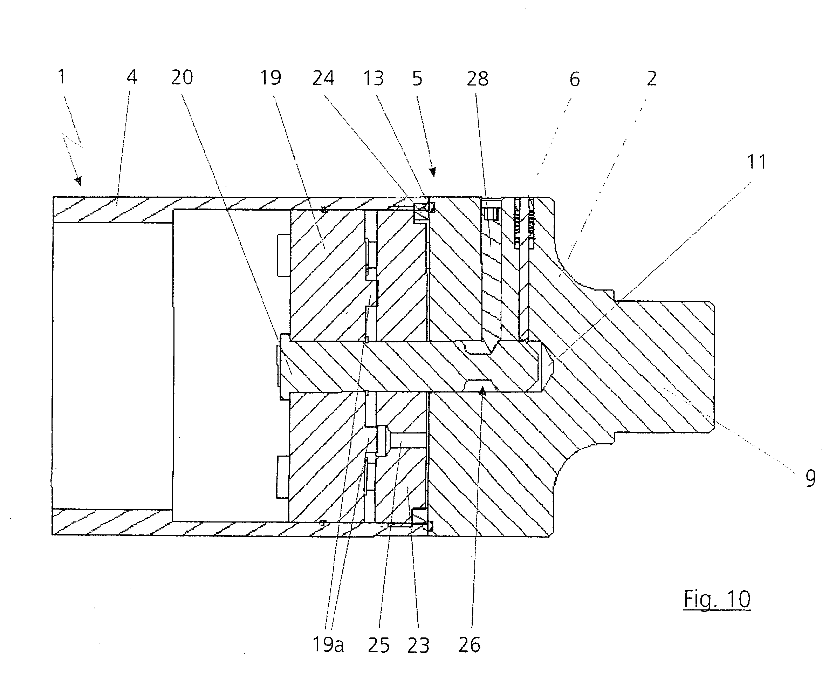

Fig. 1 zeigt eine Welle 1 zur Verwendung in Antriebs- und Transportvorrichtungen, welche zwei Endteile 2, 3 und ein zwischen den beiden Endteilen 2, 3 montiertes Mittelteil 4 aufweist. Prinzipiell könnte die Welle auch mehr als ein Mittelteil 4 aufweisen. Das Mittelteil 4 ist mittels einer nachfolgend ausführlicher beschriebenen verriegelungseinrichtung 5 mit den beiden Endteilen 2, 3 verriegelbar und von denselben entriegelbar. In die beiden Endteile 2, 3 sind je ein in Fig. 10 detaillierter dargestellter Anzeigestift 6 integriert, wobei diese in dem gezeigten Beispiel neben jeweiligen als Sicherungselementen ausgebildeten Sicherungseinrichtungen 7 der Endteile 2, 3 angeordnet sind. Im korrekt montierten Zustand schließen die Anzeigestifte 6 jeweils etwa bündig mit der Außenkontur der Endteile 2 bzw. 3 ab. Die Verwendung der Anzeigestifte 6 ist als optional anzusehen, da die wesentlichen Funktionen der Welle 1 auch ohne diese realisiert werden können. Die Funktion der Sicherungselemente 7 wird zu einem späteren Zeitpunkt detailliert erläutert.

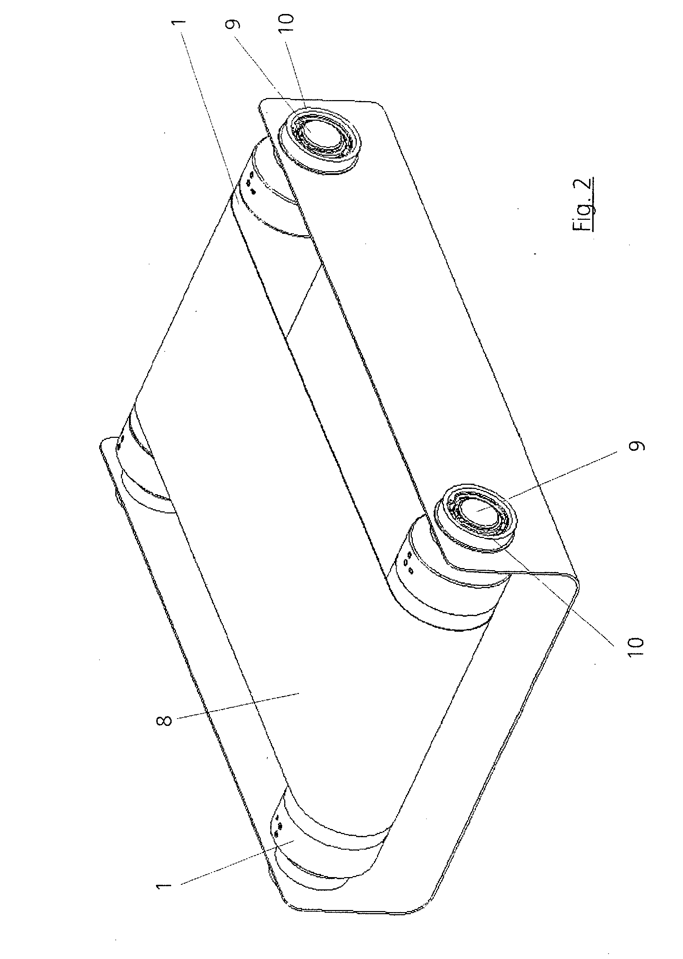

Fig. 2 zeigt zwei erfindungsgemäße Wellen 1 mit einem umlaufenden Band 8 in einer Antriebs- und Transportvorrichtung. Die beiden Wellen 1 sind an ihren jeweiligen Lagerzapfen 9 der Endteile 2 bzw. 3 in Lagereinrichtungen 10, die im vorliegenden Fall als Kugellager ausgebildet sind, gelagert. Wie in Fig. 2 zu erkennen ist, sind die beiden Wellen 1 in einem U-Profil gehalten, was durch die erfindungsgemäße Ausführung der Wellen 1 ermöglicht wird. Der Antrieb einer der Wellen 1 erfolgt in diesem Fall von außen, zum Beispiel mittels eines nicht dargestellten Elektromotors, vorzugsweise über einen der Lagerzapfen 9.

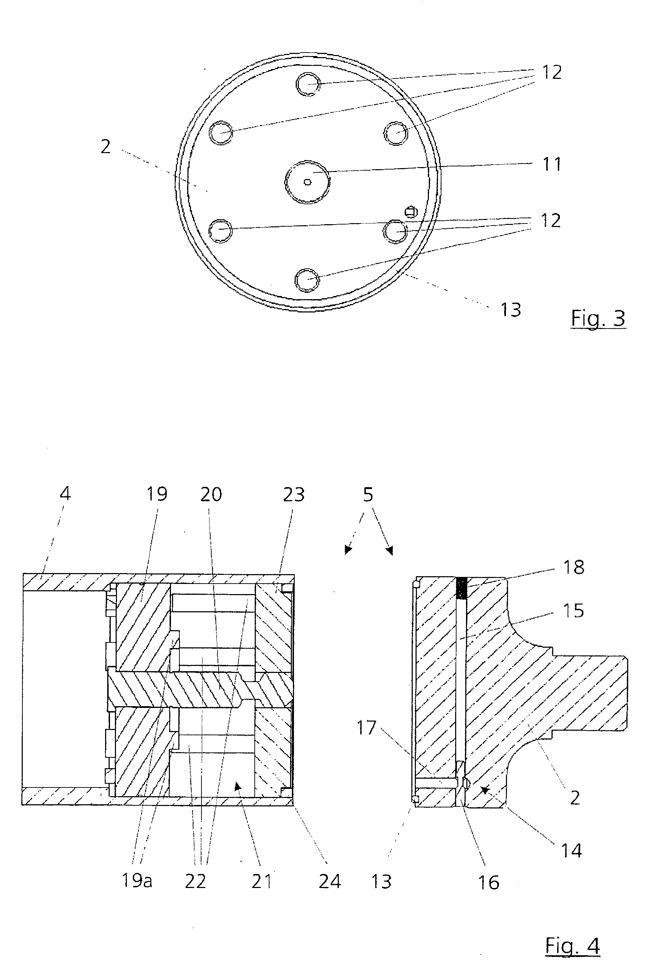

In Fig. 3 ist in einer Draufsicht ein von dem Mittelteil 4 demontiertes Endteil 2 der Welle 1 dargestellt. Das Endteil 2 weist in dessen Zentrum eine Aussparung 11, eine Mehrzahl von an dem Rand des Endteils 2 angeordneten Ausnehmungen 12 und ein im vorliegenden Fall ringförmiges Dichtungselement 13 auf. Hier nicht dargestellt ist das Endteil 3 der Welle 1, da sich der konstruktive Aufbau und die Funktionen der beiden Endteile 2, 3 entsprechen.

Fig. 4 zeigt einen Schnitt nach der Linie IV - IV aus Fig. 1, wobei sich das Endteil 2 in seinem vom dem Mittelteil 4 demontierten Zustand befindet. Eine Unterdruckerzeugungseinrichtung 14, die im vorliegenden Fall in dem Endteil 2 angeordnet ist, beinhaltet eine mit Druck beaufschlagbare Druckleitung 15, ein in der Druckleitung 15 angeordnetes Unterdruckerzeugungselement 16 sowie eine von dem Unterdruckerzeugungselement 16 seitlich wegführende Unterdruckleitung 17. Die Unterdruckerzeugungseinrichtung 14 ist so ausgebildet, dass bei Aufbringen von Druck auf die Druckleitung 15, beispielsweise mittels Druckluft, durch das Unterdruckerzeugungselement 16 aufgrund eines Venturieffekts ein Unterdruck in der Unterdruckleitung 17 erzeugt wird. Auf der dem Unterdruckerzeugungselement 16 gegenüberliegenden Seite kann die Druckleitung 15 mittels eines Verschließelements 18 verschlossen werden, so dass in die Druckleitung 15 eingeleiteter Druck auch in die Unterdruckleitung 17 einströmen kann und in derselben dann statt Unterdruck Überdruck herrscht.

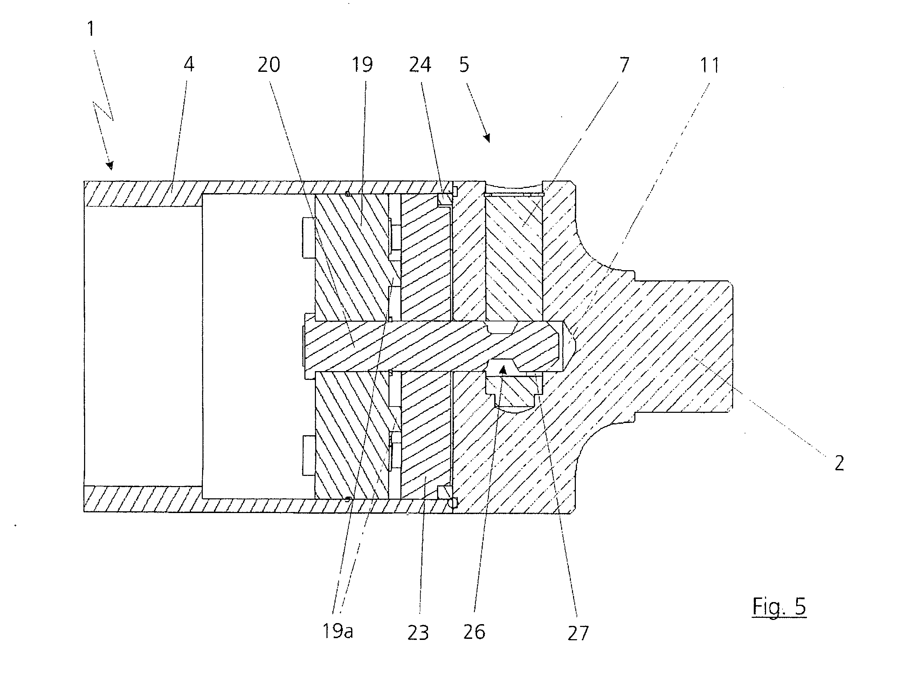

In dem linken Abschnitt von Fig. 4 ist erkennbar, dass die Verriegelungseinrichtung 5 einen verschieblichen Kolben 19 aufweist, an dem ein Verriegelungsbolzen 20 angebracht ist, der in dem verriegelten Zustand des Mittelteils 4 gegenüber dem Endteil 2 in die Aussparung 11 eingreift. Der Kolben 19 wirkt auf einen Druckraum 21. Des Weiteren weist die Verriegelungsvorrichtung 5 mehrere Führungsbolzen 22 auf, die in axialer Richtung zusammen mit dem Kolben 19 durch ein Führungsteil 23, in welchem diese gelagert sind, bewegt werden können und dabei in die Ausnehmungen 12 des Endteils 2 eintauchen. Der Druckraum befindet sich also zwischen dem Kolben 19 und dem Führungsteil 23. Das Endteil 2 und das Mittelteil 4 sind in radialer Richtung durch das Eingreifen der Führungsbolzen 22 in die Ausnehmungen 12 verdrehsicher verbunden. Dabei sind die Führungsbolzen 22 vorzugsweise mit möglichst wenig Spiel in die Ausnehmungen 12 eingepasst. Das Zusammenwirken der Führungsbolzen 22 mit den Ausnehmungen 12 ermöglicht auch die Übertragung von Drehmomenten und insbesondere auch Biegemomenten zwischen dem Endteil 2 und dem Mittelteil 4 der Welle 1. Der Kolben 19 weist mehrere Vorsprünge 19a auf, die in den Druckraum 21 ragen und, indem sie als Abstandshalter wirken, auch in dem Zustand der Welle 1 gemäß Fig. 5 stets eine gewisse Größe des Druckraums 21 sicherstellen.

Alternativ zu der beschriebenen Ausführung mit einer Mehrzahl von Führungsbolzen 22 an dem Kolben 19, welche im verriegelten Zustand in die Ausnehmungen 12 der Endteile 2, 3 eingreifen, kann eine Drehmomentübertragung zwischen den Endteilen 2, 3 und dem Mittelteil 4 auch durch andere, gegebenenfalls auch aus dem Stand der Technik bekannte Lösungen erfolgen. Beispielsweise können der Verriegelungsbolzen 20 und die Aussparung 11 einen unrunden Querschnitt aufweisen, so dass dadurch eine Drehmomentübertragung sichergestellt ist. Des weiteren ist es auch möglich, lediglich einen Führungsbolzen 22 vorzusehen.

Das Führungsteil 23 ist im dargestellten Ausführungsbeispiel mit dem Mittelteil 4 verschraubt. An dem Führungsteil 23 ist zusätzlich ein ringförmiges Anschlagelement 24 vorgesehen, um die axiale Position des Führungsteils 23 justieren zu können. Auf diese Weise kann außerdem eine bestimmte Kraft, mit der die Endteile 2, 3 an dem Mittelteil 4 befestigt sind, eingestellt werden. In das Führungsteil 23 ist außerdem noch eine Durchführung 25 eingebracht, durch die eine Verbindung zu der Unterdruckerzeugungseinrichtung 14 hergestellt werden kann. Auf das Führungsteil 23 kann auch verzichtet werden, beispielsweise wenn ein breiterer Kolben 19 eingesetzt wird.

Fig. 5 stellt eine Schnittansicht eines Abschnitts des Mittelteils 4 und des Endteil 2 der Welle 1 im verriegelten Zustand und in einer anderen Schnittebene als die Figuren 3 und 4 dar. Der Verriegelungsbolzen 20 greift in diesem verriegelten Zustand in die Aussparung 11 des Endteils 2 ein. Der Verriegelungsbolzen 20 weist eine Nut 26 auf, welche sich in diesem Zustand ebenfalls in der Aussparung 11 befindet. Fig. 5 zeigt das Sicherungselement 7 in einer Stellung, in der ein Exzenterstift 27, der an dem Sicherungselement 7 angebracht ist und sich innerhalb der Aussparung 11 befindet, den Verriegelungsbolzen 20 in axialer Richtung mittels eines Formschlusses klemmt. Generell kann das Sicherungselement 7 um seine Längsachse z.B. mittels eines Werkzeugs, welches in das Sicherungselement 7 eingreifen kann, gedreht werden, wobei sich der Exzenterstift 27 mit dem Sicherungselement 7 dreht. Falls die Anwendung es erfordert, können mittels dieser formschlüssigen Verbindung auch Kräfte in axialer Richtung zwischen dem Endteil 2 und dem Mittelteil 4 übertragen werden, in jedem Fall ist jedoch das Mittelteil 4 sicher mit den Endteilen 2 und 3 verbunden.

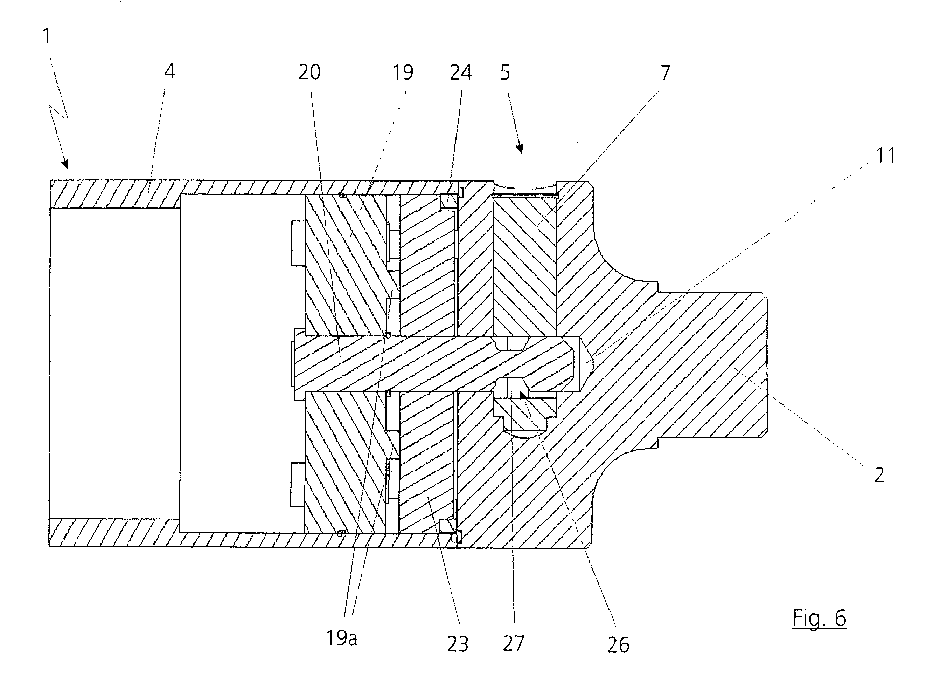

In Fig. 6 ist ein Abschnitt des Mittelteils 4 und der Endteil 2 der Welle 1 mit dem Exzenterstift 27 in seinem entriegelten Zustand dargestellt. Im Vergleich zu dem Zustand der Welle 1 gemäß Fig. 5 befindet sich das Sicherungselement 7 dabei in einer derartigen Stellung, in welcher keine formschlüssige Verbindung zwischen dem Exzenterstift 27 und der Nut 26 des Verriegelungsbolzen 20 vorliegt und in welcher der Verriegelungsbolzen 20 durch eine axiale Bewegung an dem Exzenterstift 27 vorbeigeführt werden kann.

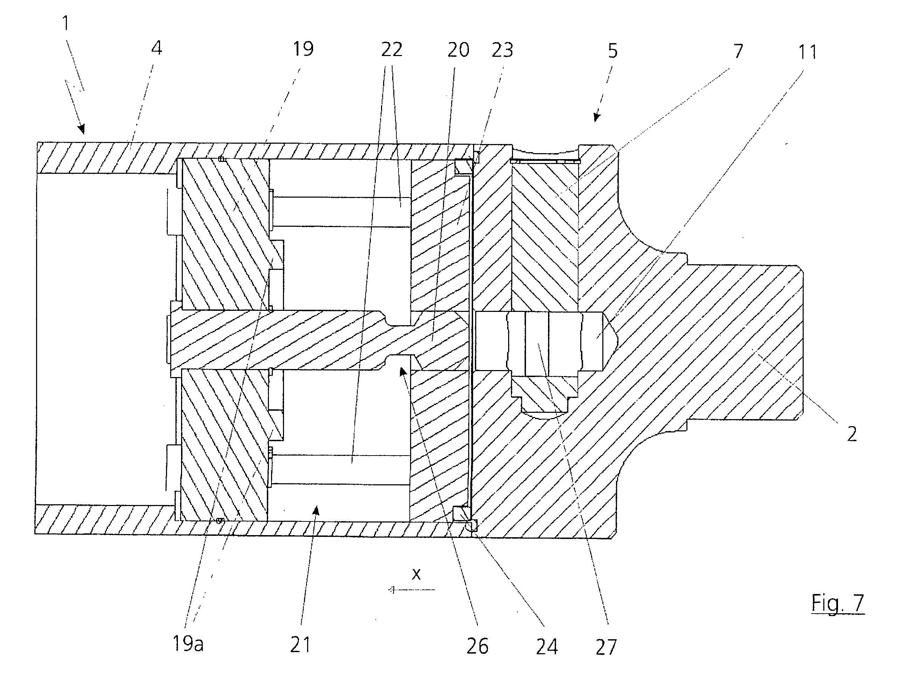

In Fig. 7 ist ein Abschnitt des Mittelteils 4 und ein Endteil 2 der Welle 1 dargestellt, wobei der Kolben 19 ausgefahren ist und der Verriegelungsbolzen 20 nicht mehr in die Aussparung 11 sowie die Führungsbolzen 22 nicht mehr in die Ausnehmungen 12 des Endteils 2 eingreifen. In diesem entriegelten Zustand der Welle 1 können zwischen dem Endteil 2 und dem Mittelteil 4 insbesondere keine axialen Kräfte und/oder Drehmomente übertragen werden.

Das Ausfahren des Kolbens 19 in der mit "x" bezeichneten Richtung erfolgt bei der erfindungsgemäßen Welle 1 durch die Unterdruckerzeugungseinrichtung 14. Dazu befindet sich das Verschließelement 18 in dem dem Unterdruckerzeugungselement 16 abgewandten Ende der Druckleitung 15, so dass ein druckbeaufschlagtes Medium, welches über das Unterdruckerzeugungselement 16 in die Druckleitung 15 eingeleitet wird, auch in die Unterdruckleitung 17 strömen kann. Das Druckmedium gelangt auf diese Weise über die Durchführung 25 in den Druckraum 21. Der dadurch in dem Druckraum 21 aufgebaute bzw. herrschende Druck führt dann zu einem Ausfahren des Kolbens 19 in der x-Richtung.

Zum Einfahren des Kolbens 19 in den Druckraum 21 und damit zum Verriegeln des Mittelteils 4 mit dem jeweiligen Endteil 2 bzw. 3 kann, wie oben angedeutet, bei der erfindungsgemäßen Welle 1 ebenfalls die Unterdruckerzeugungseinrichtung 14 verwendet werden. Dazu wird das Verschließelement 18 aus der Druckleitung 15 entfernt. Anstelle des in diesem Ausführungsbeispiel eingesetzten Verschließelements 18 kann das Öffnen und Schließen der Druckleitung 15 auch durch ein hier nicht dargestelltes Ventil erreicht werden. Die Unterdruckerzeugungseinrichtung 14 ist so ausgebildet, dass bei einem Anlegen eines druckbeaufschlagten Mediums im Falle der durch das Fehlen des Verschließelements 18 geöffneten Druckleitung 15 an dem Unterdruckerzeugungselement 16 in der Unterdruckleitung 17 ein Unterdruck erzeugt wird, durch den über die Durchführung 25 auch in dem zu dem Kolben 19 benachbarten Druckraum 21 ein Unterdruck entsteht, wodurch der Kolben 19 in Richtung des Führungsteils 23, also entgegen der Richtung "x", angesaugt wird. Das Verriegeln des Mittelteils 4 gegenüber den Endteilen 2, 3 erfolgt also umgekehrt zum Lösen bzw. Entriegeln. Nach dem oben beschriebenen Verriegeln des Verriegelungsbolzens 20 mit dem Sicherungselement 7 kann die Beaufschlagung der Druckleitung 15 mit dem Druckmedium beendet werden.

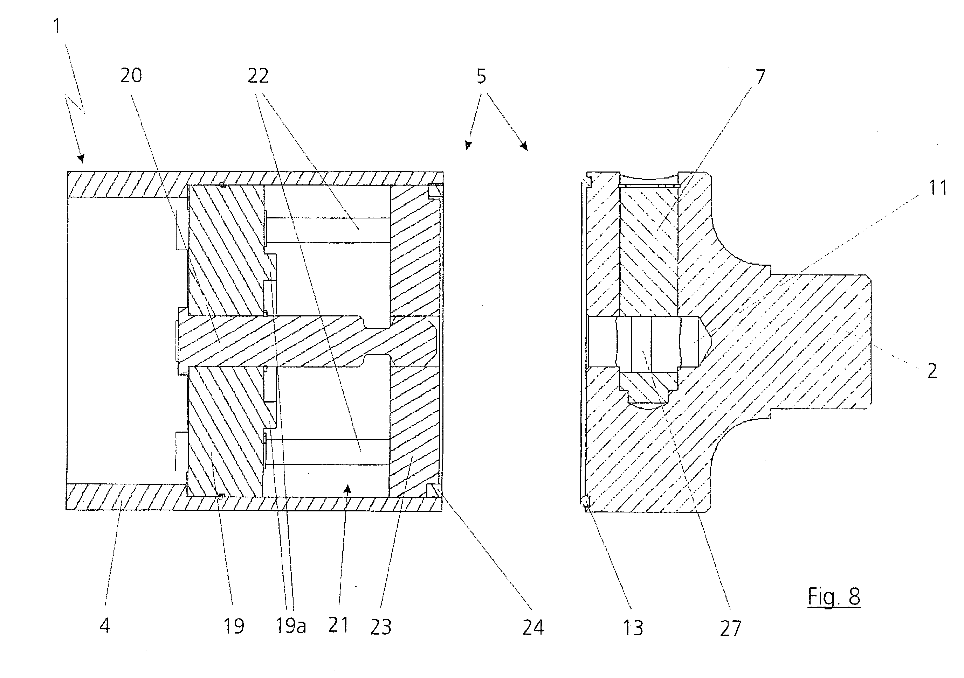

Fig. 8 stellt einen Abschnitt des Mittelteils 4 und ein Endteil 2 der Welle 1 dar, wobei diese beiden Teile räumlich voneinander getrennt vorliegen. Insbesondere ist zu erkennen, dass bei der hier gezeigten Stellung des Sicherungselements 7 der Verriegelungsbolzen 20, wie bereits erläutert, an dem Exzenterstift 27 vorbeigeführt werden kann. Die Erfindung sieht vor, dass die räumliche Trennung der Endteile 2, 3 und des Mittelteils 4, d.h. die Demontage dieser Teile voneinander, durch eine Bewegung dieser beiden Teile in einer im wesentlichen radialen Richtung erfolgen kann. Da zur Trennung der Teile praktisch keine oder nur eine sehr geringe, im Bereich des durch die Lagereinrichtungen 10 ermöglichten Spiels liegende Bewegung in axialer Richtung erforderlich ist, müssen die beiden Endteile 2,3 zum Wechseln eines umlaufenden Bands bzw. Riemens somit auch nicht notwendigerweise aus den Lagerungen 9 ausgebaut werden. Im demontierten Zustand gemäß Fig. 8 ist erkennbar, dass sowohl das Endteil 2 als auch das Mittelteil 4 jeweilige Trennebenen ohne störende Kanten aufweisen. Das dort ebenfalls dargestellte Dichtungselement 13 dient zur Abdichtung zwischen dem Endteil 2 und dem Mittelteil 4, um Verluste bei der oben beschriebenen Anwendung des Unterdrucks zu vermeiden.

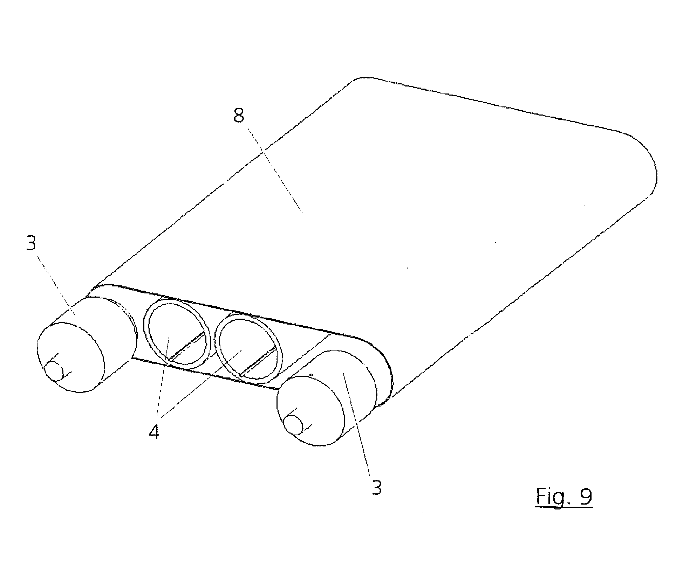

In Fig. 9 ist ein Ausführungsbeispiel einer Antriebs- und Transportvorrichtung mit zwei demontierte Wellen 1 und mit einem umlaufenden Band 8 dargestellt. In dieser Darstellung sind die sich durch die Möglichkeit der Trennung der Endteile 2, 3 von den Mittelteilen 4 in radialer Richtung ergebenden Vorteile der erfindungsgemäßen Welle 1, insbesondere ein vereinfachtes Wechseln des Bands 8 mit einem verringertem Kosten- und Zeitaufwand, deutlich zu erkennen.

Fig. 10 zeigt in einer Schnittdarstellung einen Abschnitt eines Mittelteils 4 und ein Endteil 2 einer Welle 1 einer Antriebs- und Transportvorrichtung in einer alternativen Ausführungsform. In dem gezeigten alternativen Ausführungsbeispiel ist das Sicherungselement 7 als Gewindestange 28 ausgebildet, die den Verriegelungsbolzen 20 in der das Mittelteil 4 mit dem Endteil 2 bzw. 3 verriegelnden Position hält. Auf den Exzenterstift 27 wird dabei verzichtet. Dabei ist der Anzeigestift 6 gut zu erkennen, der zur schnellen visuellen Überprüfung einer geeigneten axialen Position des Mittelteils 4 relativ zur Position des Endteils 2 eingesetzt werden kann. Bei korrekter Montage ist der Anzeigestift 6 bündig mit der Oberfläche der Welle 1, im vorliegenden Fall des Endteils 2 derselben.

Statt Druckluft könnte auch ein anderes Druckmedium verwendet werden, wie zum Beispiel ein Hydraulikmedium, das im Falle von höheren Kräften Vorteile bringen könnte.

Des weiteren könnte die Unterdruckerzeugungseinrichtung 14 auch durch eine Vakuumpumpe gebildet werden, wobei die dargestellte und beschriebene Unterdruckerzeugungseinrichtung 14 besonders einfach zu bedienen ist und ohne großen Aufwand eingesetzt werden kann.

Die Welle 1 könnte auch bei Anwendungen ohne Bänder oder Riemen eingesetzt werden, beispielsweise bei Rollengängen oder ähnlichem oder auch zur Fertigung, wie zum Beispiel bei Papiermaschinen.

Zwischen den Endteilen 2, 3 einerseits und dem Mittelteil 4 andererseits kann eine Verrastung oder zumindest eine Markierung vorgesehen sein, die eine korrekte Montage der Endteile 2, 3 an dem Mittelteil 4 oder umgekehrt gewährleistet.

Im dargestellten Ausführungsbeispiel sind bestimmte Bauteile in dem Endteil 2 bzw. 3, andere in dem Mittelteil 4 angeordnet. Prinzipiell könnte die Anordnung der Bauteile auch umgekehrt sein, wobei die dargestellte Anordnung Vorteile hinsichtlich einer einfacheren Ver- und Entriegelung sowie einer besseren Raumausnutzung aufweist.

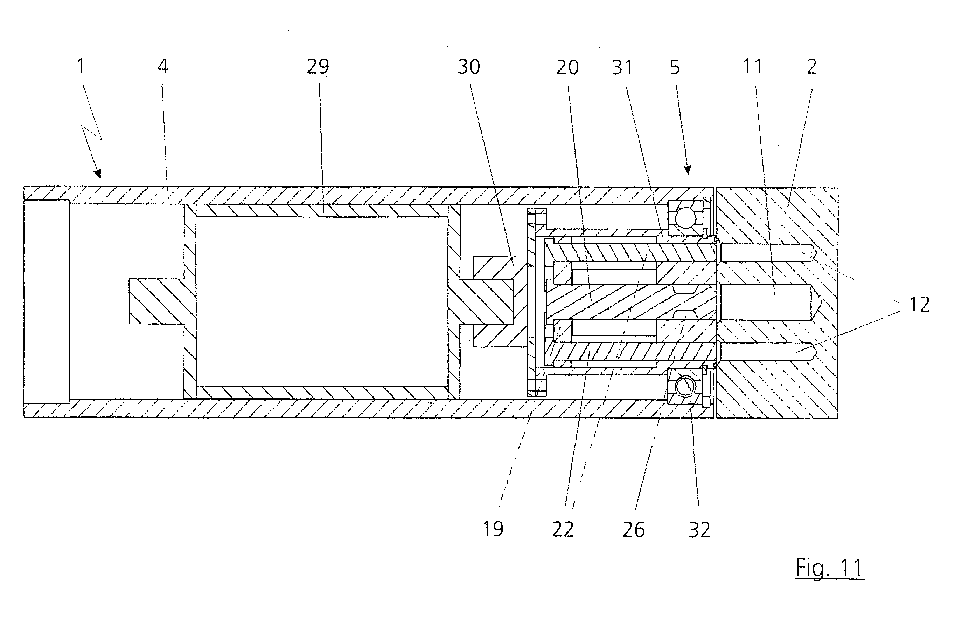

In Fig. 11 ist eine alternative Ausführungsform der Welle 1 dargestellt. Dabei ist innerhalb des hohlen Mittelteils 4 ein beispielsweise als Trommelmotor ausgeführter Elektromotor 29 angeordnet, der zum Antrieb der Welle 1 dient. Dadurch kann auf einen externen Antrieb derselben verzichtet werden. Der Elektromotor 29, der einen nicht bezeichneten, außenliegenden Rotor und einen ebenfalls nicht bezeichneten, innenliegenden Stator aufweist, ist über ein Verbindungselement 30 mit einer Hülse 31 verbunden, in welcher unter anderem der Kolben 19, der Verriegelungsbolzen 20 und die Führungsbolzen 22 angeordnet sind, um auf diese Weise eine Drehmomentabstützung für den Elektromotor 29 zu erreichen. Die Verbindung des Elektromotors 29 über das Verbindungselement 30 mit der Hülse 31 kann auf an sich bekannte Weise erfolgen. Die Hülse 31 ist mittels eines Wälzlagers 32 gegenüber dem Mittelteil 4 gelagert. Dadurch kann sich das Mittelteil 4 gegenüber der feststehenden Hülse 31 bewegen, wenn das Mittelteil 4 direkt von dem Elektromotor 29, dessen äußerer Mantel mit dem Mittelteil 4 beispielsweise mittels Schrauben oder durch Verschweißen verbunden ist, angetrieben wird. Auch die beiden Endteile 2 und 3 sind in diesem Fall starr. Eine für den Elektromotor 29 erforderliche Stromversorgung ist in Fig. 11 nicht dargestellt, kann jedoch mit an sich bekannten Mitteln realisiert werden. Auch über den Verriegelungsbolzen 20 und/oder die Führungsbolzen 22 könnte die elektrische Kontaktierung des Elektromotors 29 realisiert werden.

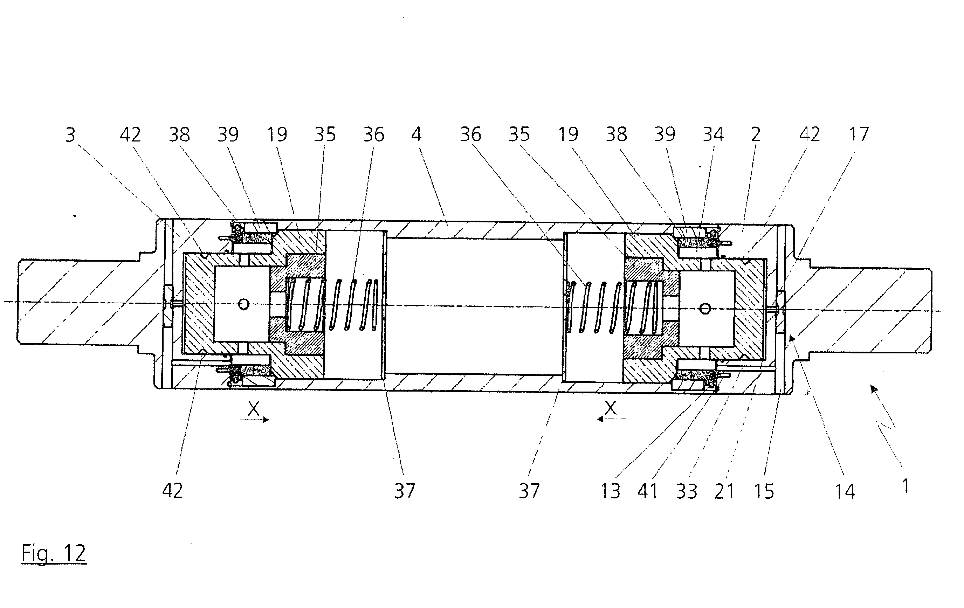

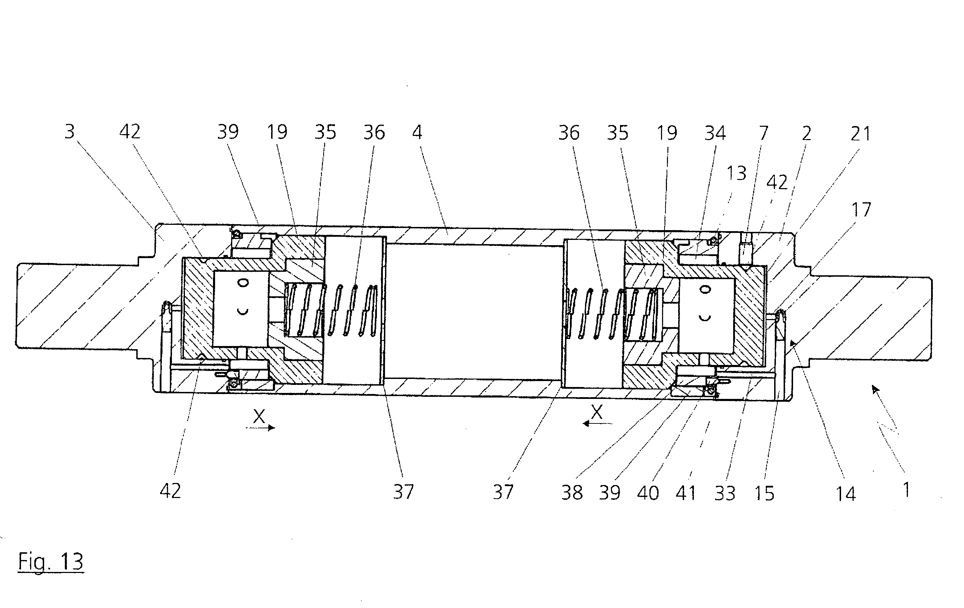

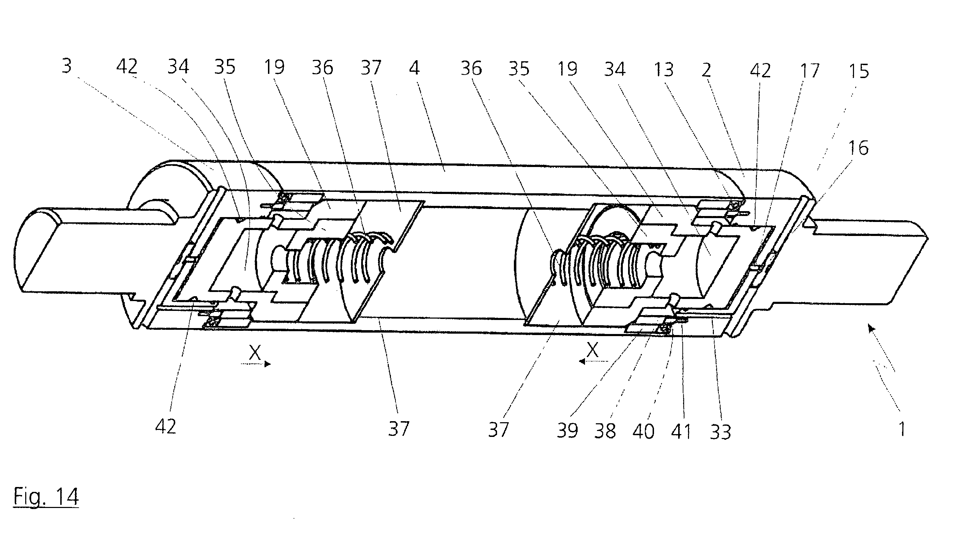

Die Figuren 12, 13 und 14 zeigen eine weitere Ausführungsform der Welle 1, wobei in diesem Fall das Mittelteil 4 und die beiderseits desselben angeordneten Endteile 2 und 3 dargestellt sind. Dabei zeigt Fig. 13 eine andere Schnittebene als Fig. 12. Nachfolgend wird jedoch nur die Verbindung eines der Endteile 2 und 3 mit dem Mittelteil 4 beschrieben, wobei aus den Figuren zu erkennen ist, dass beide Verbindungen vorzugsweise identisch miteinander bzw. spiegelverkehrt zueinander ausgeführt sind. Dabei ist wiederum die Unterdruckerzeugungseinrichtung 14 vorgesehen, deren Wirkungsweise im Prinzip der oben beschriebenen entspricht. Demzufolge führt von der Druckleitung 15 eine Unterdruckleitung 17 zu dem Druckraum 21. Zusätzlich ist bei dieser Ausführungsform jedoch eine zu dem auch hier vorgesehenen Kolben 19 führende Überdruckleitung 33 vorgesehen, die zu einem weiteren, sich zwischen dem Endteil 2 bzw. dem Endteil 3 und dem Kolben 19 befindlichen Druckraum 34 führt. Über die zusätzlich Überdruckleitung 33 kann der Kolben 19 mit Druck beaufschlagt werden, um den Kolben in der mit "X" bezeichneten Richtung zu bewegen, wodurch die Demontage des Mittelteils 4 von den beiden Endteilen 2 und 3 eingeleitet werden kann.

Im Unterschied zu einigen der oben beschriebenen Ausführungsformen der Welle 1 wird hierbei auf die Führungsbolzen 22 und das Führungsteil 23 verzichtet. Des Weiteren ist der Kolben 19 bei dieser Ausführungsform stufenförmig ausgebildet und weist zwei unterschied große Durchmesser auf. Innerhalb des größeren Durchmessers des Kolbens 19 befindet sich ein Druckstück 35, das in den Hohlraum des Kolbens 19 eingepasst ist. Auf das Druckstück 35 wirkt ein Federelement 36, welches eine Kraft in Schließrichtung, also entgegen der mit "X" bezeichneten Richtung, auf den Kolben 19 ausübt, wodurch sich eine gewisse zentrierung der Bauteile und dadurch eine Montageerleichterung ergibt. Gegebenenfalls könnte auf das Druckstück 35 auch verzichtet werden, wenn der Kolben 19 so ausgebildet wäre, dass er das Federelement 36 aufnehmen könnte. Das Federelement 36 stützt sich in der dargestellten Ausführungsform an einer Platte 37 ab, die wiederum an Querschnittsverengungen des inneren Durchmessers des Mittelteils 4 abgestützt ist.

Benachbart zu dem Kolben 19 ist innerhalb der Welle 1 ein ringförmiges Bauteil 38 angeordnet, das, wie nachfolgend beschrieben, dafür vorgesehen ist, ein Drehmoment von dem jeweiligen Endteil 2 bzw. 3 über das ringförmige Bauteil 38 auf das Mittelteil 34 zu übertragen. Hierzu ist das ringförmige Bauteil 38 verschieblich innerhalb des Mittelteils 4 der Welle 1 angeordnet und wird bei der Bewegung des Kolbens 19 in Richtung "X" bzw. entgegen dieser Richtung "X" ebenfalls verschoben, d.h. das ringförmige Bauteil 38 bewegt sich mit dem Kolben 19.

Die Verbindung des ringförmigen Bauteils 38 mit dem Mittelteil 4 erfolgt im dargestellten Ausführungsbeispiel mittels jeweiliger Rollen 39, die sich am äußeren Umfang des ringförmigen Bauteils 38 befinden und sowohl in nicht näher dargestellte Ausnehmungen am äußeren Umfang des ringförmigen Bauteils 38 als auch in nicht näher dargestellte Ausnehmungen am inneren Umfang des Mittelteils 4 eingreifen. Auf diese Weise ergibt sich mittels der Rollen 39 also eine formschlüssige Verbindung des ringförmigen Bauteils 38 mit dem Mittelteil 4 der Welle 1, die eine Drehmomentübertragung zwischen dem ringförmigen Bauteil 38 und dem Mittelteil 4 ermöglicht. Die auftretenden Querkräfte und Biegemoment werden von dem Kolben 19 aufgenommen.

Um von dem jeweiligen Endteil 2 bzw. 3 ein Drehmoment auf das jeweilige ringförmige Bauteil 38 übertragen zu können, weist das ringförmige Bauteil 38 im vorliegenden Fall mehrere um den Umfang desselben verteilte, vorzugsweise konisch ausgeführte Bolzen 40 auf, die in dem in den Figuren 12, 13 und 14 dargestellten verriegelten Zustand des Mittelteils 4 in jeweilige Ausnehmungen 41 in dem Endteil 2 bzw. 3 eingreifen. Durch die oben beschriebene Bewegung des ringförmigen Bauteils 38 mit dem Kolben 19 werden die konischen Bolzen 40 in die Ausnehmungen 41 geschoben bzw. gepresst.

Das Sicherungselement 7 ist bei der Ausführungsform der Figuren 12, 13 und 14 als Sicherungsstift ausgebildet, der in am Umfang des Kolbens 19 vorgesehene Einkerbungen 42 eingreift. Dadurch kann der Kolben 19 in seiner Verriegelungsstellung gesichert werden. Gleichzeitig ersetzt der Kolben 19 den Verriegelungsbolzen 20 bzw. übernimmt dessen Funktion.

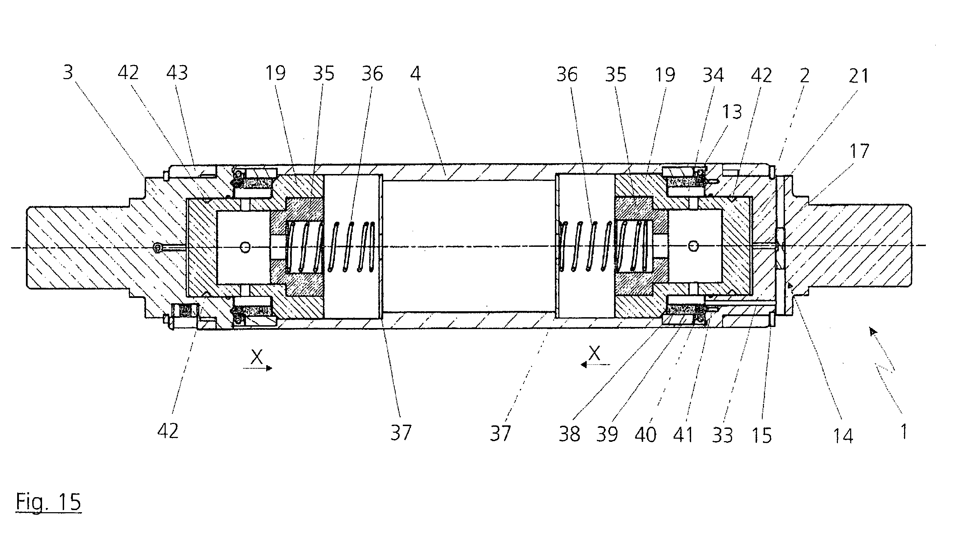

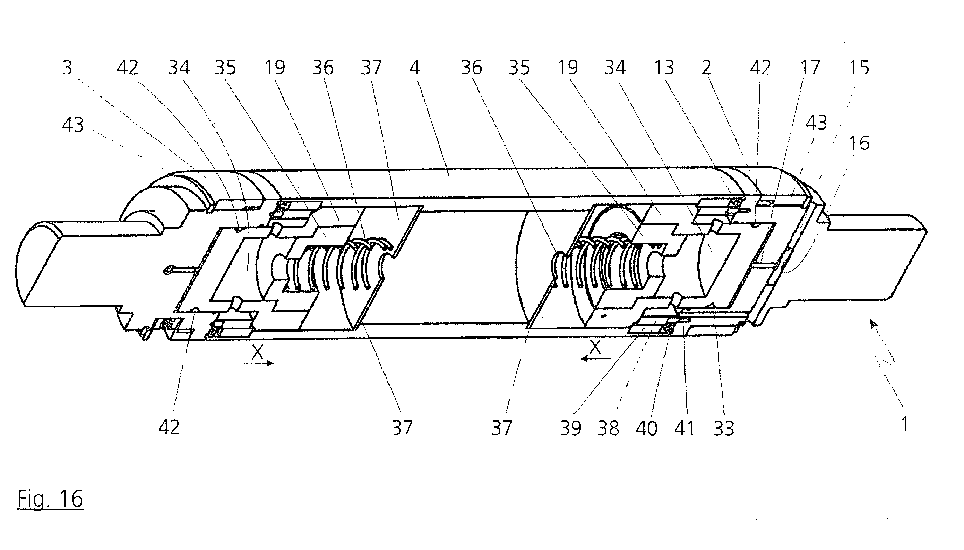

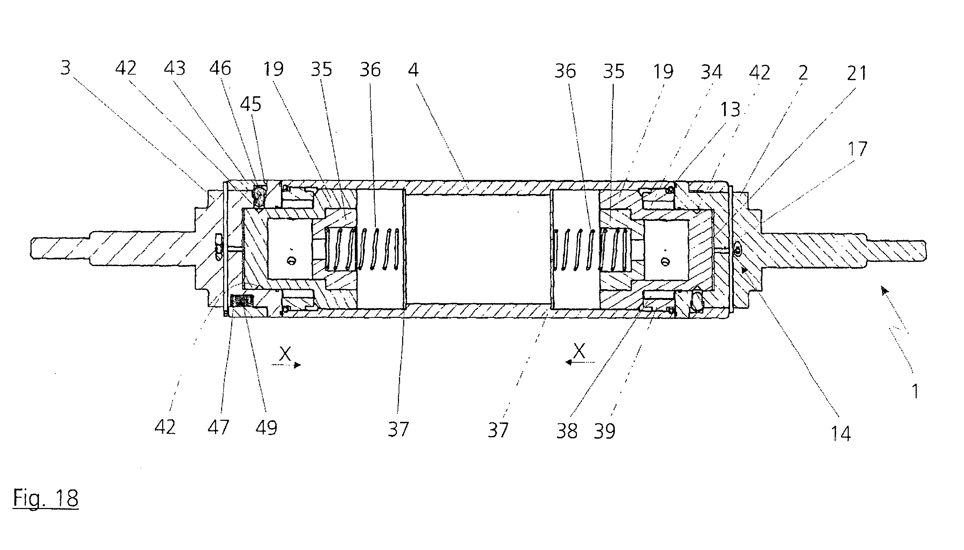

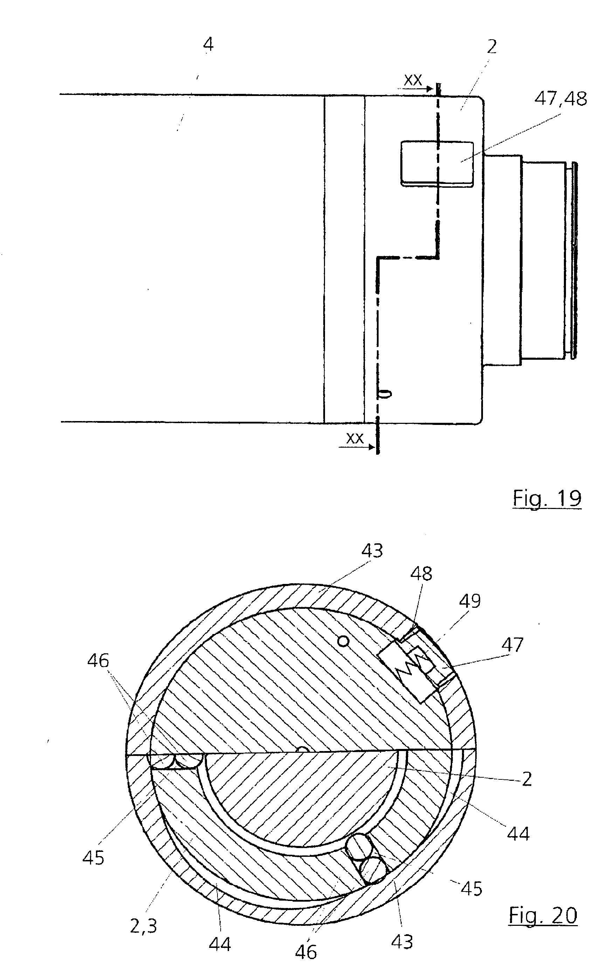

Die Figuren 15, 16, 17, 18 und 19 zeigen eine weitere Ausführungsform der Welle 1, die ähnlich zu der in den Figuren 12, 13 und 14 dargestellten Ausführungsform derselben ist. Hierbei weisen die beiden Endteile 2 und 3 jeweils eine Hülse 43 auf, die zur Verriegelung des jeweiligen Endteils 2 bzw. 3 mit dem Mittelteil 4 dient. Am inneren Umfang der Hülse 43 sind mehrere Aussparungen 44 vorgesehen, die in dem Schnitt von Fig. 20 sehr gut zu erkennen sind. Im vorliegenden Fall handelt es sich um drei um jeweils 120° zueinander versetzte Aussparungen 44, die als Vergrößerungen des inneren Umfangs der Hülse 43 ausgebildet sind. Die Umfangsvergrößerungen verlaufen im vorliegenden Fall konisch, sodass sich der in Fig. 20 dargestellte Spaltraum als Aussparung 44 ergibt. Des Weiteren weist das jeweilige Endteil 2, 3 im vorliegenden Fall drei um den Umfang desselben verteilt angeordnete Bohrungen 45 zur Aufnahme von Verriegelungselementen 46 auf, mit denen der Kolben 19 in seiner Endstellung bzw. verriegelten Stellung gesichert werden kann. Die Verriegelungselemente 46 greifen dabei in die am Umfang des Kolbens 19 vorgesehenen Einkerbungen 42 ein.

Durch Verdrehen der Hülse 43 gegenüber dem Endteil 2 bzw. 3 können die im vorliegenden Fall als Kugeln ausgebildeten Verriegelungselemente 46 in eine bestimmte Position gegenüber den Aussparungen 44 gebracht werden. Wenn sich die Verriegelungselemente 46 im Bereich der Aussparungen 44 befinden, nimmt die Hülse 43 ihre geöffnete Stellung ein, die in den Figuren nicht dargestellt ist. Befinden sich die Verriegelungselemente 46 zwischen den Aussparungen 44, wie in Fig. 20 dargestellt, so werden sie von dem sich zwischen den Aussparungen 44 befindlichen, einen geringeren Innendurchmesser aufweisenden Bereich der Hülse 43 geklemmt und die Hülse 43 nimmt ihre verriegelt Stellung ein, in der sie das jeweilige Endteil 2 bzw. 3 mit dem Mittelteil 4 verriegelt. Durch die in den Bohrungen 45 des jeweiligen Endteils 2, 3 angeordneten Verriegelungselemente 46 ergibt sich also eine formschlüssige Verriegelung des jeweiligen Endteils 2 bzw. 3 mit dem Mittelteil 4. Dabei stellen die Verriegelungselemente 46 das Sicherungselement 7 dar.

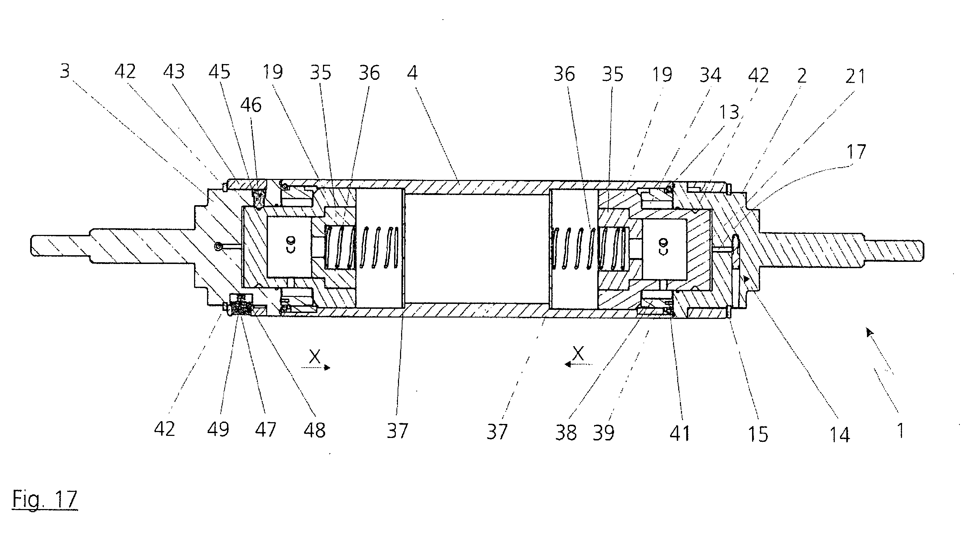

In der Hülse 43 ist des Weiteren eine Taste 47 vorgesehen, die, wie nachfolgend beschrieben, zur Entriegelung der Hülse 43 aus ihrem oben beschriebenen verriegelten Zustand dient. In dem Zustand von Fig. 17 greifen die Verriegelungselemente 46 in die Einkerbungen 42 ein und verriegeln somit die Hülse 43. Dabei greift auch die Taste 47 in eine Ausnehmung 48 in der Hülse 43 ein, sodass die Hülse 43 nicht mehr verdreht werden kann. Für das Einrasten der Taste 47 in dieser Position sorgt ein unterhalb der Taste 47 angeordnetes und dieselbe nach außen drückendes Federelement 49. Wird die Taste 47 entgegen der Kraft des Federelements 49 gedrückt und in die Ausnehmung 48 geschoben, so kann die Hülse 43 wie oben beschrieben verdreht werden. Dann liegt die Taste 47, beaufschlagt von dem Federelement 49, am inneren Umfang der Hülse 43 an und drückt gegen dieselbe. Mit der Taste 47 ergibt sich also eine selbsttätige Verriegelung der Hülse 43, die durch Drücken der Taste 47 aufgehoben werden kann.

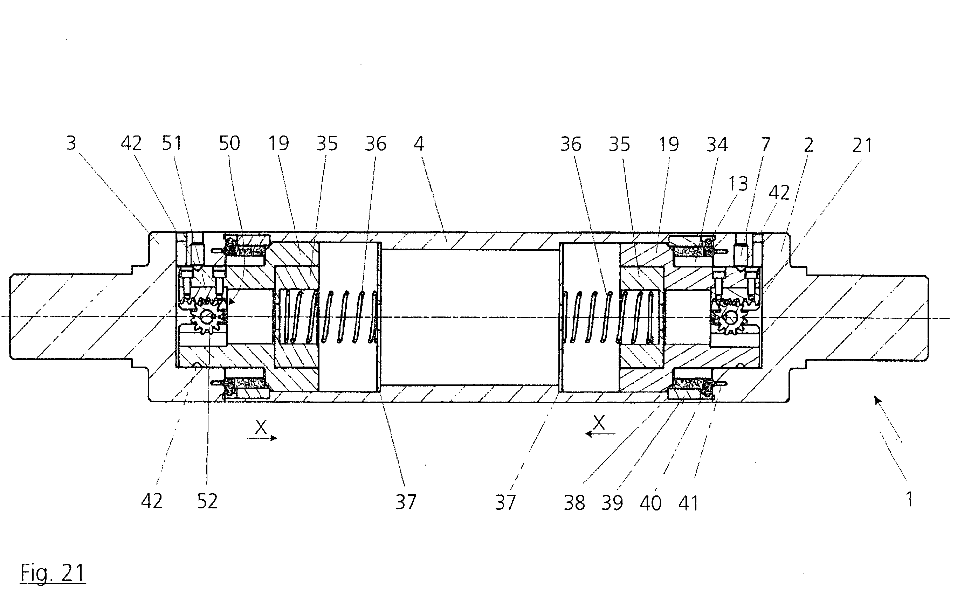

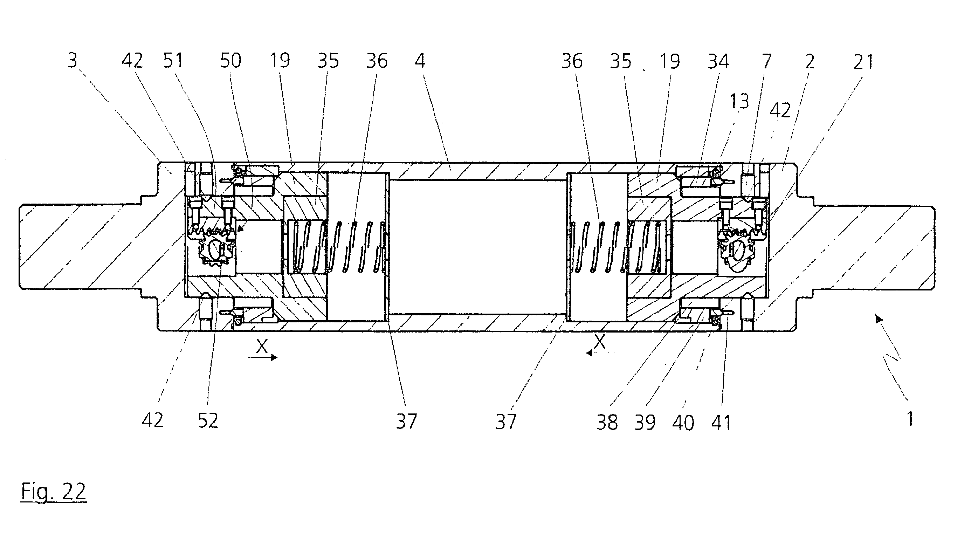

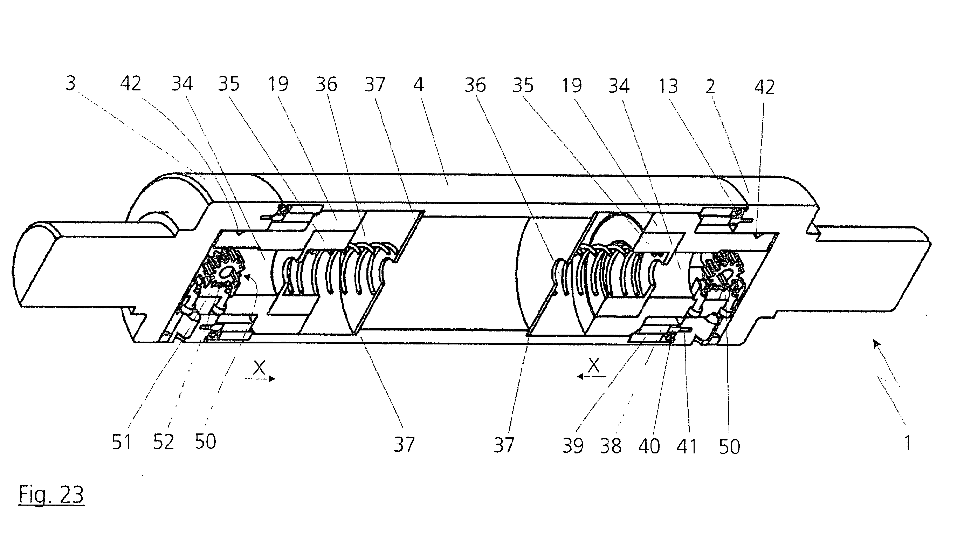

Eine weitere Ausführungsform der Welle 1 ist in den Figuren 21, 22 und 23 dargestellt. Dabei zeigt Fig. 22 eine andere Schnittebene als Fig. 21. Bei dieser Ausführungsform wird auf die Unterdruckerzeugungseinrichtung 14 vollständig verzichtet und die Bewegung des Kolbens 19 innerhalb der Welle 1 erfolgt mittels einer mechanischen Getriebeeinrichtung 50. Die mechanische Getriebeeinrichtung 50 weist im vorliegenden Fall eine Zahnstange 51 und ein mit der Zahnstange 51 in Eingriff bringbares Zahnrad 52 auf. Demnach ist die mechanische Getriebeeinrichtung 50 in dem dargestellten Ausführungsbeispiel als Zahnradgetriebe ausgeführt. Alternativ wäre es jedoch auch möglich, beispielsweise ein Exzentergetriebe oder ein anderes geeignetes Getriebe als die mechanische Getriebeeinrichtung 50 zum Verschieben des Kolbens 19 innerhalb der Welle 1 einzusetzen. Durch Betätigen des Zahnrads 52 wird die Zahnstange 51 in Bewegung gesetzt, welche so mit dem Kolben 19 verbunden ist, dass diese Bewegung der Zahnstange 51 unmittelbar zu einer Bewegung des Kolbens 19 führt.

In der Ausführungsform der Figuren 21, 22 und 23 ist zwar das wiederum als Stift ausgebildete Sicherungselement 7 dargestellt, es ist jedoch auch möglich, auf dasselbe zu verzichten und die Funktion des Sicherungselements 7 bzw. der Sicherungseinrichtung in die mechanische Getriebeeinrichtung 50 zu integrieren. Dies kann bei der dargestellten Ausführungsform beispielsweise dadurch erreicht werden, dass die Zahnstange 51 so ausgeführt ist, dass sie gegenüber dem Zahnrad 52 festgesetzt werden kann bzw. dass mit der Zahnstange 51 das Zahnrad 52 festgesetzt werden kann. Dabei kann auch vorgesehen sein, dass das Zahnrad 52 erst dann festgesetzt werden kann, wenn sich das ringförmige Bauteil 38 in seiner Endposition befindet, d.h. wenn die konischen Bolzen 40 in die Ausnehmungen 41 eingreifen.

Bei dieser Ausführungsform ist es möglich, eine Bohrung in einem oder beiden Endteilen 2, 3 anzubringen, über welche eine Sichtkontrolle vorgenommen werden kann, ob sich die mechanische Getriebeeinrichtung 50 in ihrer Endstellung befindet. Eine solche Bohrung kann beispielsweise mit Plexiglas oder ähnlichem verschlossen werden.

Grundsätzlich ist es auch möglich, den Kolben 19 so stark gegen das jeweilige Endteil 2 oder 3 zu drücken, dass eine Übertragung von Drehmoment nur aufgrund der auftretenden Reibung möglich ist. Dies ist vor allem in Fällen denkbar, in denen ein relativ geringes Drehmoment übertragen werden muss. Dabei übernimmt dann der Kolben 19 die Funktion des Sicherungselements 7 bzw. der Sicherungseinrichtung.

Sämtliche der oben beschriebenen Ausführungsformen der Welle 1 können im Prinzip beliebig miteinander kombiniert werden, wenn nicht offensichtliche Gründe dagegen sprechen.

## Patentansprüche

1. Welle (1) zur Verwendung in Antriebs- und Transportvorrichtungen mit zwei Endteilen (2,3) und mindestens einem zwischen den beiden Endteilen (2,3) montierten Mittelteil (4), welches mittels einer jeweiligen Verriegelungseinrichtung (5) mit den beiden Endteilen (2,3) verriegelbar und von denselben entriegelbar ist,
**dadurch gekennzeichnet, dass**
die Verriegelungseinrichtung (5) einen verschieblichen Kolben (19) aufweist, der in dem verriegelten Zustand des Mittelteils (4) mittels eines jeweiligen Sicherungselements (7) zumindest mittelbar gegenüber dem jeweiligen Endteil (2,3) verriegelbar ist.

2. Welle (1) nach Anspruch 1,
**dadurch gekennzeichnet, dass**
an dem Kolben (19) ein Verriegelungsbolzen (20) angebracht ist, der in dem verriegelten Zustand des Mittelteils (4) in eine Aussparung (11) eingreift, in welcher er mittels des jeweiligen Sicherungselements (7) verrie-gelbar ist.

3. Welle (1) nach Anspruch 1 oder 2,
**dadurch gekennzeichnet, dass**
der Kolben (19) mittels einer in einem zu dem Kolben (19) benachbarten Druckraum (21) einen Unterdruck erzeugenden Unterdruckerzeugungseinrichtung (14) verschieblich ist.

4. Welle (1) nach Anspruch 3,
**dadurch gekennzeichnet, dass**
die Unterdruckerzeugungseinrichtung (14) eine mit Druck beaufschlagbare Druckleitung (15), ein in der Druckleitung (15) angeordnetes Unterdruckerzeugungselement (16) und eine von dem Unterdruckerzeugungselement (16) zu dem Druckraum (21) führende Unterdruckleitung (17) aufweist.

5. Welle (1) nach Anspruch 4,
**dadurch gekennzeichnet, dass**
die Druckleitung (15) mittels eines Verschließelements (18) verschließbar ist, um über das Unterdruckerzeugungselement (16) in dem Druckraum (21) einen Überdruck zu erzeugen.

6. Welle (1) nach Anspruch 3, 4 oder 5,
**dadurch gekennzeichnet, dass**
zu dem Kolben (19) eine Überdruckleitung (33) führt, über welche der Kolben (19) derart mit Druck beaufschlagbar ist, dass der Kolben (19) verschieblich ist.

7. Welle (1) nach Anspruch 1 oder 2,
**dadurch gekennzeichnet, dass**
der Kolben (19) mittels einer mechanischen Getriebeeinrichtung (50) verschieblich ist.

8. Welle (1) nach Anspruch 7,
**dadurch gekennzeichnet, dass**
die mechanische Getriebeeinrichtung (50) eine Zahnstange (51) und ein mit der Zahnstange (51) in Eingriff bringbares Zahnrad (52) aufweist.

9. Welle (1) nach einem der Ansprüche 1 bis 8,
**dadurch gekennzeichnet, dass**
an dem Kolben (19) wenigstens ein Führungsbolzen (22) angebracht ist, welcher im verriegelten Zustand des Mittelteils (4) gegenüber dem jeweiligen Endteil (2,3) in wenigstens eine zugehörige Ausnehmung (12) eingreift.

10. Welle (1) nach einem der Ansprüche 1 bis 9,
**dadurch gekennzeichnet, dass**
der Kolben (19) in dem Mittelteil (4) angeordnet ist, und dass die Aussparung (11) und das Sicherungselement (7) in den jeweiligen Endteilen (2,3) angeordnet sind.

11. Welle (1) nach einem der Ansprüche 1 bis 10,
**dadurch gekennzeichnet, dass**
benachbart zu dem Kolben (19) ein ringförmiges Bauteil (38) angeordnet ist, welches mittels des Kolbens (19) verschieblich ist, und dass das ringförmige Bauteil (38) mit dem jeweiligen Endteil (2,3) derart verbindbar ist, dass von dem jeweiligen Endteil (2,3) ein Drehmoment auf das ringförmige Bauteil (38) übertragbar ist.

12. Welle (1) nach Anspruch 11,
**dadurch gekennzeichnet, dass**
das ringförmige Bauteil (38) mehrere konische Bolzen (40) aufweist, die in dem verriegelten Zustand des Mittelteils (4) in jeweilige Ausnehmungen (41) in dem jeweiligen Endteil (2,3) eingreifen.

13. Welle (1) nach einem der Ansprüche 1 bis 12,
**dadurch gekennzeichnet, dass**
wenigstens eines der Endteile (2,3) eine Hülse (43) aufweist, in der Aussparungen zur Aufnahme von Verriegelungselementen vorgesehen sind.

14. Welle (1) nach einem der Ansprüche 1 bis 13,
**dadurch gekennzeichnet, dass**
zwischen dem Mittelteil (4) und den Endteilen (2,3) ein Dichtungselement (13) angeordnet ist.

15. Antriebs- oder Transportvorrichtung mit einer Welle (1) nach einem der Ansprüche 1 bis 14.

## Claims

1. Shaft (1) for use in drive and transport devices having two end parts (2,3) and at least one central part (4) mounted between the two end parts (2,3), which central part (4) is lockable to and unlockable from the two end parts (2,3) by means of a respective locking device (5),
**characterised in that**
the locking device (5) has a displaceable piston (19), which is lockable at least indirectly relative to the respective end part (2,3) by means of a respective securing element (7) in the locked condition of the central part (4).

2. Shaft (1) according to Claim 1,
**characterised in that**
a locking bolt (20) is attached to the piston (19), which locking bolt (20), in the locked condition of the central part (4), engages in a recess (11) in which it is lockable by means of the securing element (7).

3. Shaft (1) according to Claim 1 or 2,
**characterised in that**
the piston (19) is displaceable by means of a negative-pressure-generating device (14) generating a negative pressure in a pressure space (21) adjacent to the piston (19).

4. Shaft (1) according to Claim 3,
**characterised in that**
the negative-pressure-generating device (14) has a pressurisable pressure line (15), a negative-pressure-generating element (16) arranged in the pressure line (15) and a negative-pressure line (17) leading from the negative-pressure-generating element (16) to the pressure space (21).

5. Shaft (1) according to Claim 4,
**characterised in that**
the pressure line (15) is closable by means of a closure element (18), in order to generate a positive pressure in the pressure space (21) via the negative-pressure-generating element (16).

6. Shaft (1) according to Claim 3, 4 or 5,
**characterised in that**
a positive-pressure line (33) leads to the piston (19), via which the piston (19) is pressurisable in such a manner that the piston (19) is displaceable.

7. Shaft (1) according to Claim 1 or 2,
**characterised in that**
the piston (19) is displaceable by means of a mechanical gear device (50).

8. Shaft (1) according to Claim 7,
**characterised in that**
the mechanical gear device (50) has a toothed rack (51) and a toothed wheel (52) engageable with the toothed rack (51).

9. Shaft (1) according to one of Claims 1 to 8,
**characterised in that**
at least one guide pin (22) is attached to the piston (19), which guide pin (22), in the locked condition of the central part (4) relative to the respective end part (2,3), engages in at least one associated cutout (12).

10. Shaft (1) according to one of Claims 1 to 9,
**characterised in that**
the piston (19) is arranged in the central part (4), and **in that** the recess (11) and the securing element (7) are arranged in the respective end parts (2,3).

11. Shaft (1) according to one of Claims 1 to 10,
**characterised in that**
there is arranged adjacent to the piston (19) an annular component (38) which is displaceable by means of the piston (19), and **in that** the annular component (38) is connectable to the respective end part (2,3) in such a manner that a torque is transmittable by the respective end part (2,3) to the annular component (38).

12. Shaft (1) according to Claim 11,
**characterised in that**
the annular component (38) has a plurality of conical pins (40) which engage in respective cutouts (41) in the respective end part (2,3) in the locked condition of the central part (4).

13. Shaft (1) according to one of Claims 1 to 12,
**characterised in that**
at least one of the end parts (2,3) has a sleeve (43), in which recesses for receiving locking elements are provided.

14. Shaft (1) according to one of Claims 1 to 13,
**characterised in that**
a sealing element (13) is arranged between the central part (4) and the end parts (2,3).

15. Drive or transport device having a shaft (1) according to one of Claims 1 to 14.

## Revendications

1. Arbre (1) en vue d'une utilisation pour des installations d'entraînement et de transport, comportant deux pièces d'extrémité (2, 3) et au moins une pièce centrale (4) montée entre les deux pièces d'extrémité (2, 3), celle-ci étant agencée pour être verrouillée et déverrouillée par rapport aux deux pièces d'extrémité (2, 3) au moyen d'un dispositif de verrouillage correspondant (5), **caractérisé en ce que** le dispositif de verrouillage (5) comporte un piston coulissant (19) qui, dans la position verrouillée de la pièce centrale (4), est agencé pour être au moins partiellement verrouillé à l'opposé de la pièce d'extrémité correspondante (2, 3) au moyen d'un élément de blocage (7) respectif.

2. Arbre (1) selon la revendication 1,
**caractérisé en ce que,**
sur le piston (19) est monté un boulon de verrouillage (20) qui, dans la position verrouillée de la pièce centrale (4) est engagé dans une creusure (11) dans laquelle il est verrouillé grâce à l'élément de blocage (7) respectif.

3. Arbre (1) selon les revendications 1 ou 2,
**caractérisé en ce que,**
le piston (19) est agencé pour créer une dépression en collaboration avec une chambre de pression (21) disposée à proximité du piston (19) et constitue une installation coulissante génératrice de dépression (14).

4. Arbre (1) selon la revendication 3,
**caractérisé en ce que,**
l'installation coulissante génératrice de dépression (14) comporte un conduit de pression (15) susceptible d'être mis sous pression, comportant un élément générateur de dépression (16) monté dans le conduit de pression (15) et un conduit de dépression (17) connecté entre l'élément générateur de dépression (16) et la chambre de pression (21).

5. Arbre (1) selon la revendication 4,
**caractérisé en ce que,**
le conduit de pression (15) peut être verrouillé au moyen d'un élément de verrouillage (18), pour générer une dépression dans la chambre de pression (21) par l'intermédiaire de l'élément générateur de dépression (16).

6. Arbre (1) selon les revendications 3, 4 ou 5,
**caractérisé en ce que,**
un conduit de pression (33) mène au piston (19), par l'intermédiaire duquel le piston est contraint par la pression de telle manière que le piston (19) soit coulissant.

7. Arbre (1) selon les revendications 1 ou 2,
**caractérisé en ce que,**
le piston (19) est coulissant grâce à une installation d'entraînement mécanique (50).

8. Arbre (1) selon la revendication 7,
**caractérisé en ce que,**
l'installation d'entraînement mécanique (50) comporte une crémaillère (51) et un pignon denté (52), en prise avec la crémaillère (51).

9. Arbre (1) selon l'une des revendications 1 à 8,
**caractérisé en ce que,**
au moins un boulon de guidage (22) est monté sur le piston (19), lequel, dans la position verrouillée de la pièce centrale (4), est engagé dans au moins un évidement correspondant (12) opposé à la pièce d'extrémité (2, 3) correspondante.

10. Arbre (1) selon l'une des revendications 1 à 9,
**caractérisé en ce que,**
le piston (19) est ménagé dans la pièce centrale (4) et **en ce que** l'évidement (11) et l'élément de blocage (7) sont ménagés dans la pièce d'extrémité (2, 3) correspondante.

11. Arbre (1) selon l'une des revendications 1 à 10,
**caractérisé en ce que,**
une pièce de construction annulaire (38) est prévue à proximité du piston (19), cette pièce étant rendue coulissante au moyen du piston (19), et **en ce que** la pièce de construction annulaire (38) est reliée aux pièces d'extrémité respectives (2, 3) de telle manière qu'un couple est appliqué sur la pièce d'extrémité respective par la pièce de construction annulaire (38).

12. Arbre (1) selon la revendication 11,
**caractérisé en ce que,**
la pièce de construction annulaire (38) comporte plusieurs boulons coniques (40), qui, dans la position verrouillée de la pièce centrale (4) sont engagés dans des évidements correspondants (41) ménagés dans les pièces d'extrémité respectives.

13. Arbre (1) selon l'une des revendications 1 à 12,
**caractérisé en ce que,**
au moins une pièce des pièces d'extrémité (2, 3) comporte une douille (43) dans laquelle sont prévus des évidements récepteurs pour des éléments de verrouillage.

14. Arbre (1) selon l'une des revendications 1 à 13,
**caractérisé en ce que,**
un élément de joint est disposé entre la pièce centrale (4) et les pièces d'extrémité (2, 3).

15. Installations d'entraînement ou de transport comportant un arbre moteur (1) selon l'une des revendications 1 à 14.
